# EUROPEAN PATENT APPLICATION

(11) **EP 2 782 019 A2**
(43) Date of publication of application: **24.09.2014**
(21) Application number: 14156334.6
(22) Date of filing: 24.02.2014
(51) Int. Cl.: G06F 13/38

(54) **IC card and portable electronic device**

(30) Priority: 21.03.2013 JP 2013058912
(71) Applicant: Kabushiki Kaisha Toshiba, Tokyo 105-8001 (JP)
(72) Inventor: Sugibuchi, Kei, Tokyo, 105-8001 (JP)
(74) Representative: HOFFMANN EITLE

(57) **Abstract**

According to one embodiment, a portable electronic device includes a communication section, a storage section, a processing section, and a first transmission section. The communication section transmits/receives data to/from an external device. The storage section stores therein an application configured to create a proactive command. When executing a command from the external device, the processing section creates a proactive command including information indicating the application by executing the application stored in the storage section. The first transmission section transmits the proactive command created by the processing section to the external device through the communication section.

## Description

### FIELD

Embodiments described herein relate generally to an IC card, and a portable electronic device.

### BACKGROUND

Some portable electronic IC card devices include a Toolkit Applet (TK Applet), as stipulated in ETSI TS 102.241. An external device of an IC card transmits a command to the IC card, and the IC card executes the TK applet. However, there is a problem that the IC card cannot notify the external device of information indicating the executed TK applet.

### (Object of Invention)

In order to solve the problem described above, an IC card which notifies an external device of an executed TK applet, and a portable electronic device are provided.

### BRIEF DESCRIPTION OF THE DRAWINGS

FIG. 1 is a view showing a configuration example of an IC card processing system including an IC card, and an IC card processing device according to an embodiment.
FIG. 2 is a view showing an example of a proactive command of an IC card according to the embodiment.
FIG. 3 is a view showing an example of a response of the IC card according to the embodiment.
FIG. 4 is a view showing an example of an event table stored in an NVM of the IC card according to the embodiment.
FIG. 5 is a sequence diagram for schematically explaining a command/response flow in the IC card according to the embodiment.

### DETAILED DESCRIPTION

In general, according to one embodiment, a portable electronic device includes a communication section, a storage section, a processing section, and a first transmission section. The communication section transmits/receives data to/from an external device. The storage section stores therein an application configured to create a proactive command. When executing a command from the external device, the processing section creates a proactive command including information indicating the application by executing the application stored in the storage section. The first transmission section transmits the proactive command created by the processing section to the external device through the communication section.

Hereinafter, an embodiment will be described below with reference to the drawings.

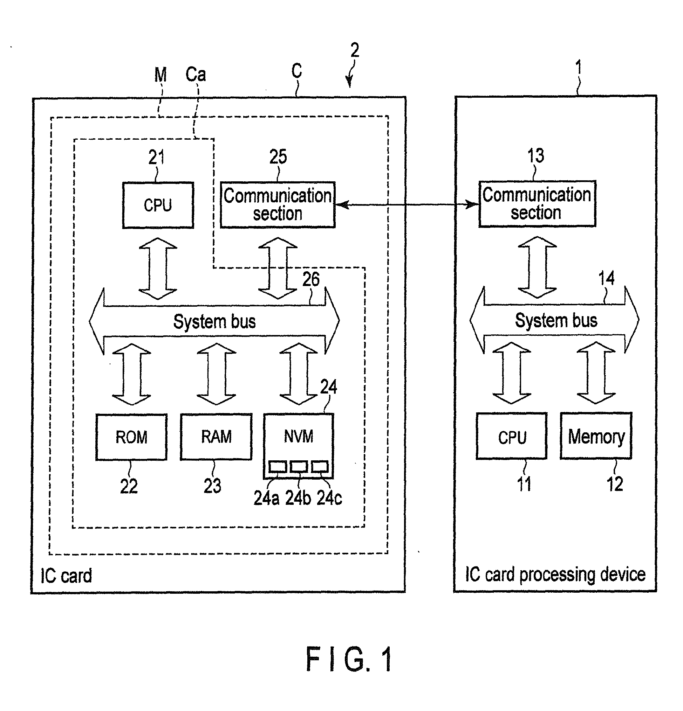

FIG. 1 is a block diagram showing a configuration example of an IC card processing system including an IC card 2 serving as a portable electronic device according to the embodiment, and IC card processing device 1 serving as an external device configured to carry out communication with the IC card 2.

First, a configuration example of the IC card processing device 1 will be described below.

In the configuration example shown in FIG. 1, the IC card processing device 1 includes a CPU 11, memory 12, and communication section 13, and the like. These members are electrically connected to each other through a system bus 14.

The CPU 11 functions as a control section configured to control operations of the entire IC card processing device 1. The CPU 11 carries out various items of processing on the basis of a control program and control data stored in the memory 12. The CPU 11 carries out various items of processing corresponding to the fundamental operation control of the IC card processing device 1 and operation form of the IC card processing device 1 by executing the program.

The CPU 11 includes a function of transmitting a command to the IC card 2 by means of the communication section 13, a function of carrying out various items of processing on the basis of data received from the IC card 2, and the like. For example, the CPU 11 carries out control of writing data to a nonvolatile memory in the IC card 2 by transmitting a write command to write data to the IC card 2 through the communication section 13. Further, the CPU 11 carries out control of reading data from the IC card 2 by transmitting a read command to the IC card 2.

It should be noted that part of the various functions to be realized by the CPU 11 by executing the program may be realized by a hardware circuit. In this case, the CPU 11 controls a function to be executed by the hardware circuit.

The memory 12 is a memory configured to store therein a control program, control data, and the like to be utilized by the IC card processing device 1. The memory 12 is provided with a nonvolatile memory, volatile memory, and the like. The memory 12 may be constituted of, for example, a RAM, ROM, EEPROM, flash memory, and the like.

The communication section 13 is an interface device configured to carry out communication with the IC card 2. The communication section 13 is constituted of an interface corresponding to the communication system of the IC card 2. For example, when the IC card 2 is a contact-type IC card, the communication section 13 is constituted of a contact section or the like configured to make a physical and electrical connection to a contact section of the IC card 2.

Further, when the IC card 2 is a contactless IC card, the communication section 13 is constituted of an antenna, communication control section, and the like which are configured to carry out wireless communication with the IC card 2. In the communication section 13, supply of power to the IC card 2, supply of a clock to the IC card 2, reset control of the IC card 2, and data transmission/reception to/from the IC card 2 are carried out.

By such functions, the communication section 13 carries out, on the basis of control to be carried out by the CPU 11, supply of power to the IC card 2, activation (startup) of the IC card 2, supply of a clock to the IC card 2, reset control of the IC card 2, transmission of various commands to the IC Card 2, reception of responses to the transmitted commands from the IC card 2, and the like.

Next, a configuration example of the IC card 2 will be described below.

The IC card 2 is configured to be activated (brought into an operable state) by receiving power or the like from an external device such as the IC card processing device 1. For example, when the IC card 2 is connected to the IC card processing device 1 by contact-type communication, i.e., when the IC card 2 is constituted of a contact-type IC card, the IC Card 2 is activated by receiving supply of operation power and an operation clock from the IC card processing device 1 through the contact section serving as a communication interface.

Further, when the IC card 2 is connected to the IC card processing device 1 by a contactless communication system, i.e., when the IC card 2 is constituted of a contactless IC card, the IC card 2 is configured to be activated by receiving a radio wave from the IC card processing device 1 through an antenna serving as a communication interface, modulation/demodulation circuit, and the like, and creating operation power and an operation clock from the radio wave by means of a power section not shown.

The IC card 2 supports CAT Runtime Environment (stipulated in ETSI TS 102.241) (CAT-RE). That is, the IC card 2 operates in conformity with CAT Runtime Environment.

The IC card 2 includes a card-like main body C formed of plastic or the like. In the IC card 2, a module M is incorporated in the main body C. The module M is integrally formed in a state where one IC chip Ca or a plurality of IC chips Ca are connected to an external interface (communication section) for communication, and is embedded in the main body C of the IC card 2.

Further, as shown in FIG. 1, the IC card 2 is provided with a CPU 21, ROM 22, RAM 23, NVM 24, communication section 25, and the like. These members are electrically connected to each other through a system bus 26. One IC chip Ca or each of the plurality of IC chips Ca is constituted of a CPU 21, ROM 22, RAM 23, and NVM 24. The IC chip Ca constitutes the module M in a state where the IC chip Ca is connected to the communication section 25.

The CPU 21 functions as a control section configured to manage control of the entire IC card 2. The CPU 21 carries out various items of processing on the basis of the control program and control data stored in the ROM 22 or the NVM 24. The CPU 21 carries out various items of processing corresponding to the fundamental operation control of the IC Card 2 and operation form of the IC card 2 by executing the program. It should be noted that part of the various functions of the IC card 2 such as the operation control, processing, and the like may be realized by a hardware circuit.

The ROM 22 is a nonvolatile memory in which a control program, control data, and the like are stored in advance. The ROM 22 is incorporated in the IC Card 2 in a state where the ROM 22 stores therein the control program, control data, and the like in the production stage. That is, the control program and control data stored in the ROM 22 are previously incorporated therein according to the specification of the IC card 2.

The RAM 23 is a volatile memory. The RAM 23 temporarily stores therein data and the like being processed by the CPU 21. The RAM 23 is provided with, for example, a reception buffer, calculation buffer, transmission buffer, and the like. The reception buffer retains commands transmitted from the IC card processing device 1 through the communication section 25. The calculation buffer retains a temporary result in order that the CPU 21 may carry out various calculations. The transmission buffer retains data to be transmitted to the IC card processing device 1 through the communication section 25. For example, the CPU 21 interprets a command retained in the reception buffer, executes processing corresponding to the command by using the calculation buffer, and stores a result of the executed processing in the transmission buffer.

The NVM 24 is a nonvolatile memory in which writing and rewriting of data can be carried out. The NVM 24 is constituted of, for example, an EEPROM, flash memory or the like. The NVM 24 stores therein a control program, application, and various data items according to the operation usage of the IC card 2.

The NVM 24 includes a recording area 24a used to record a first TK applet, recording area 24b used to record a second TK applets, recording area 24c used to record an event table, and the like. The first TK applet, second TK applet, and event table will be described later.

The communication section 25 is an interface configured to carry out communication with the communication section 13 of the IC card processing device 1. When the IC card 2 is realized as a contact-type IC card, the communication section 25 is constituted of a communication control section, and contact section configured to physically and electrically come into contact with the communication section 13 of the IC card processing device 1 to thereby carry out transmission/reception of a signal. Further, when the IC card 2 is realized as a contactless IC card, the communication section 25 is constituted of a communication control section such as a modulation/demodulation circuit or the like, and an antenna, which are configured to carry out wireless communication with the communication section 13 of the IC card processing device 1.

Next, the first TK applet and second TK applet stored in the NVM 24 of the IC card 2 will be described below.

As described previously, the first TK applet, and second TK applet are stored in the recording area 24a, and recording area 24b, respectively.

The first TK applet (first TK applet 24a) stored in the recording area 24a is a Toolkit Applet (TK Applet (stipulated in ETSI TS 102.241)). A TK applet is an application which operates when the CPU 21 executes an event in accordance with CAT-RE, according to the event. The CPU 21 executes a TK applet corresponding to an event each time an event occurs.

The TK applet is, for example, an application or the like configured to count the number of times data is written to the NVM. In this case, each time an event to which the TK applet is made to correspond is executed, the CPU 21 executes the TK applet, and counts the number of times data is written to the NVM.

It should be noted that the operation contents of the TK applet are not limited to a specific configuration.

Further, the TK applet may create a proactive command. The TK applet stores information indicating the TK applet itself in the proactive command. That is, the proactive command stores therein information indicating the TK applet which has created the proactive command. Further, the TK applet may store some other information in the proactive command. The proactive command will be described later.

The TK applet may be stored in the NVM 24 when the IC card 2 is issued or may be added later. When the TK applet is stored in the IC card 2 at the time of issue of the IC card 2, the TK applet may be stored in the ROM 22.

The second TK applet (second TK applet 24b) stored in the recording area 24b is, like the first TK applet, a TK Applet.

It should be noted that the NVM 24 may store therein further TK applets. The number of TK applets stored in the NVM 24 is not limited to a specific number.

Next, the proactive command will be described below.

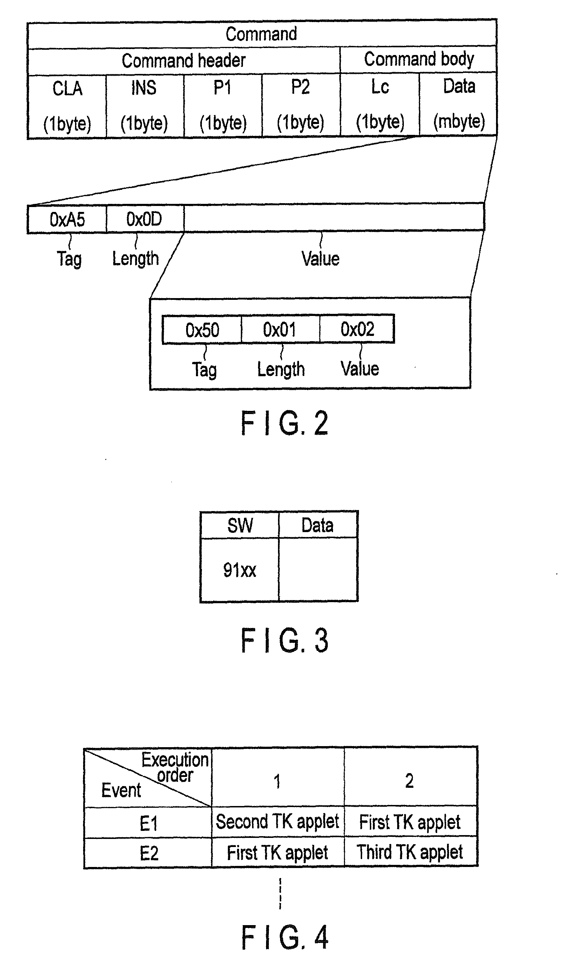

FIG. 2 shows an example of a proactive command created by the CPU 21 of the IC card 2.

Each of "CLA", and "INS" of the command header stores therein information indicating a type of a command. Each of "P1", and "P2" stores therein a parameter of a command. Further, "Lc" of the command body stores therein information indicating a length of "Data" (data part). Further, "Data" stores therein data which is an object to be processed for the command.

The data part of the proactive command is data (TLV data) of the TLV format constituted of an identifier (Tag), data length (Length), and value (Value). Further, the proactive command has a nesting structure (one TLV data item or a plurality of TLV data items are included in a parent TLV data value (Value)).

Further, "Data" stores therein information indicating the TK applet which has created the proactive command. As shown in FIG. 2, "Value" of "Data" stores therein data of the TVL format in which "Tag" is "0x50" as the TK applet data indicating the TK applet. For example, when "Value" of the TK applet data is "0x02", the TK applet data indicates that the TK applet which has created the proactive command is the second TK applet.

The value of "Value" of the TK applet data may indicate any TK applet. The configuration of "Value" of the TK applet is not limited to a specific configuration.

It should be noted that when "Data" does not store therein data in which "Tag" is "0x50", the proactive command may indicate that the proactive command has been created by a predetermined TK applet (for example, a TK applet other than the first TK applet 24a).

It is sufficient if the value of "Tag" of the TK applet data is a value of "Tag" of data which is not changed or is not discarded by the CPU 21 operating in accordance with CAT-RE. That is, it is sufficient if "Tag" of the TK applet data is "Tag" of data which is transmitted by the CPU 21 to the IC card processing device 1 without being changed or being discarded by the CPU 21 in the CAT-RE standard. In the example shown in FIG. 2, although the value of "Tag" is "0x5", the value is not limited to a specific value if the above condition is satisfied.

Further, the proactive command is created by using a proactive handler. The proactive handler is a resource of the IC card 2 used by the proactive command. That is, the proactive command is created by utilizing the proactive handler. The proactive handler is defined by the standard of the IC card 2. One proactive handler exists for the IC card 2 in terms of the standard. That is, the IC card 2 cannot create two or more proactive commands at a time. When the proactive command is transmitted, the proactive handler is released, and becomes a resource of some other proactive command.

The proactive command is transmitted from the IC card 2 to the IC card processing device 1 as a reply to a FETCH command to be transmitted from the IC card processing device 1. The FETCH command is a command used to fetch a proactive command from the IC card 2. That is, after receiving a FETCH command, the CPU 21 of the IC card 2 transmits the proactive command as a reply to the FETCH command. Further, the CPU 21 transmits a response requesting a FETCH command to the IC card processing device 1.

FIG. 3 is an example of a response by which the CPU 21 of the IC card requests a FETCH command.

As shown in FIG. 3, the response includes SW, and a data part. Here, SW is a value indicating an execution result of a command, presence/absence of a request for a FETCH command, and the like. That is, when requesting a FETCH command, the CPU 21 stores a predetermined value in SW of the response. Here, SW requesting a FETCH command is "91xx" (xx indicates a length of the proactive command). That is, when requesting a FETCH command, the CPU 21 rewrites SW of the response to "91xx". The value of SW requesting a FETCH command is not limited to a specific value.

The data part stores therein data to be transmitted to the IC card processing device 1. For example, when the command is a read command, the data part stores therein data to be read by the read command. Further, when there is no data to be transmitted to the IC card processing device 1 (for example, when the command is a write command), the data part stores therein nothing.

Next, the event table will be described below.

As described previously, the event table is stored in the recording area 24c.

FIG. 4 shows an example of an event table to be stored in the recording area 24c.

The event table (event table 24c) to be stored in the recording area 24c stores therein events, and TK applets in a state where each of the events is made to correspond to a relevant one of the TK applets. Further, the event table stores therein TK applets in a state where the TK applets are arranged in the order in which they are executed.

An event corresponds to a predetermined operation of the CPU 21. That is, an event is executed when the CPU 21 carries out a predetermined operation. For example, when receiving a write command from the IC card processing device 1, and writing data to the NVM 24, the CPU 21 executes an event E1. An operation to which the event corresponds is determined in advance.

Further, the event table 24c indicates TK applets corresponding to the events in a state where the TK applets are arranged in the order in which they are executed. When executing events, the CPU 21 executes the TK applets in sequence according to the execution order.

For example, the event table 24c indicates that the event E1 is made to correspond to the second TK applet 24b, and first TK applet 24a. Further, the event table 24c indicates that, in the event E1, the execution order number of the second TK applet 24b is "1", and the execution order number of the first TK applet 24a is "2". Accordingly, when executing the event E1, the CPU 21 executes the second TK applet 24b first, and then executes the first TK applet 24a.

It should be noted that the number of TK applets made to correspond to an event may be one or three or more. The number of TK applets made to correspond to an event is not limited to a specific number. Further, the execution order is not limited to the specific order.

Further, when a TK applet is installed, the CPU 21 may rewrite the event table 24c on the basis of a command from the IC card processing device 1. For example, when a TK applet is newly installed, the CPU 21 may change a TK applet corresponding to an event or may change the execution order. Further, the CPU 21 may add a new event to the event table 24c.

Next, an operation example of the IC card 2 will be described below.

It is assumed here that the CPU 11 of the IC card processing device 1 transmits a command Co through the communication section 13. Although the command Co is a write command, read command or the like, the command Co is not limited to a specific command. Further, it is assumed that, in the IC card 2, the command Co is made to correspond to the event E1. Further, it is assumed that the first TK applet 24a, and the second TK applet 24b create the first proactive command, and second proactive command, respectively.

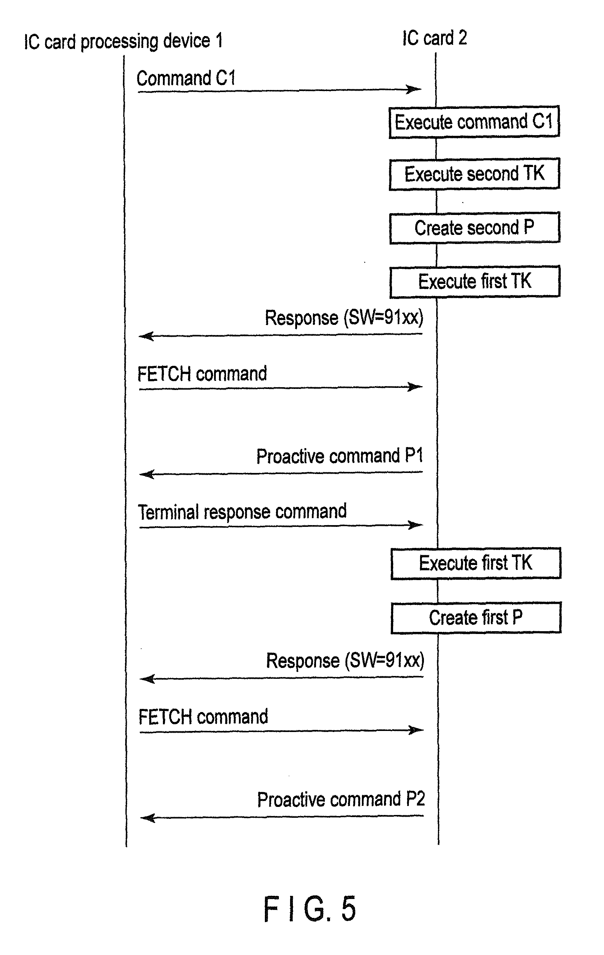

FIG. 5 is a sequence diagram showing an example of commands/responses between the IC card processing device 1, and IC card 2.

First, the CPU 11 of the IC card processing device 1 transmits a command Co to the IC card 2 through the communication section 13.

The CPU 21 of the IC card 2 receives the command Co through the communication section 25. Upon receipt of the command Co, the CPU 21 executes the command Co. It is assumed here that the CPU 21 has succeeded in execution of the command Co. Upon success in execution of the command Co, the CPU 21 creates a response storing therein SW indicating that success in execution of the command Co has been achieved. The CPU 21 stores the created response in the transmission buffer or the like of the RAM 23. When the command Co is a command to transmit data to the IC card processing device 1 (for example, when the command Co is a read command), the CPU 21 stores data obtained by executing the command Co in the response described above.

After executing the command Co, the CPU 21 executes the event E1. That is, the CPU 21 executes TK applets made to correspond to the event E1 according to the execution order.

In the example shown in FIG. 4, the event table 24c indicates that TK applets made to correspond to the event E1 are the second TK applet 24b, and first TK applet 24a, the execution order number of the second TK applet 24b is "1", and the execution order number of the first TK applet 24a is "2".

Accordingly, first, the CPU 21 executes the second TK applet 24b. As described previously, the second TK applet 24b creates a proactive command. Accordingly, after executing the second TK applet 24b, the CPU 21 creates a second proactive command by using the proactive handler.

After creating the second proactive command, the CPU 21 stores the second proactive command in the RAM 23. After storing the second proactive command in the RAM 23, the CPU 21 rewrites the value of SW stored in the response to a value (SW=91xx) making a request to the IC card processing device 1 for a FETCH command of a proactive command.

After rewriting SW, the CPU 21 executes the first TK applet 24a. As described previously, the first TK applet 24a creates a proactive command. However, the proactive handler has already been occupied, and hence the CPU 21 cannot create a proactive command even when the CPU 21 executes the first TK applet 24a. Accordingly, the CPU 21 sets an event E11 in which, when the proactive handler is released, the first TK applet 24a is executed, whereby a proactive command is created.

After setting the event, the CPU 21 transmits a response to the IC card processing device 1 through the communication section 25.

The CPU 11 of the IC card processing device 1 receives the response through the communication section 13. Upon receipt of the response, the CPU 11 transmits a FETCH command to the IC card 2 through the communication section 13.

The CPU 21 of the IC card 2 receives the FETCH command through the communication section 25. Upon receipt of the FETCH command, the CPU 21 fetches the second proactive command from the RAM 23, and transmits the second proactive command to the IC card processing device 1 through the communication section 25.

The CPU 11 of the IC card processing device 1 receives the second proactive command through the communication section 13. Upon receipt of the second proactive command, the CPU 11 transmits a terminal response to the IC card 2 through the communication section 13. The terminal response is a response to the proactive command.

The CPU 21 of the IC card 2 receives the terminal response through the communication section 25. Upon receipt of the terminal response, the CPU 21 operates according to the event E11. That is, the CPU 21 determines whether or not the proactive handler has been released. Here, the CPU 21 has already transmitted the second proactive command created by using the proactive handler, and hence the proactive handler has already been released. Accordingly, the CPU 21 determines that the proactive handler has already been released.

Upon determining that the proactive handler has already been released, the CPU 21 executes the first TK applet 24a. As described previously, the first TK applet 24a creates a proactive command. Accordingly, after executing the first TK applet 24a, the CPU 21 creates a first proactive command by using the proactive handler.

After creating the first proactive command, the CPU 21 stores the second proactive command in the RAM 23. After storing the second proactive command in the RAM 23, the CPU 21 creates a response indicating that regarding the value of SW stored in the response, a value (SW=91xx) making a request to the IC card processing device 1 for a FETCH command to fetch a proactive command is to be stored in the response as SW.

After creating the response, the CPU 21 transmits the created response to the IC card processing device 1 through the communication section 25.

The CPU 11 of the IC card processing device 1 receives the response through the communication section 13. Upon receipt of the response, the CPU 11 transmits a FETCH command to the IC card 2 through the communication section 13.

The CPU 21 of the IC card 2 receives the FETCH command through the communication section 25. Upon receipt of the FETCH command, the CPU 21 fetches the second proactive command from the RAM 23, and transmits the second proactive command to the IC card processing device 1 through the communication section 25.

The CPU 11 of the IC card processing device 1 receives the response through the communication section 13.

It should be noted that the CPU 11 may transmit a terminal response to the IC card 2 through the communication section 13 after receiving the response. In this case, the CPU 21 of the IC card 2 may transmit a response to the terminal response to the IC card processing device 1 through the communication section 25.

Further, in a case where the CPU 21 executes a TK applet configured to create a proactive command when the proactive handler is occupied, the CPU 21 may create an event different from the above example. Further, in this case, the CPU 21 may not create an event.

The IC card configured as described above can transmit a proactive command indicating the executed TK applet to the IC card processing device. Accordingly, the IC card can notify the IC card processing device of the executed TK applet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A portable electronic device configured to execute a command from an external device comprising:
a communication section (25) configured to transmit/receive data to/from the external device;
a storage section (24) configured to store therein an application used to create a proactive command;
a processing section (21) configured to, when executing a command from the external device, create a proactive command including information indicating the application by executing the application stored in the storage section; and
a first transmission section (21) configured to transmit the proactive command created by the processing section to the external device through the communication section.

2. The portable electronic device according to claim 1, further comprising
a second transmission section (21) configured to, when the processing section has created a proactive command by executing the application, transmit a response requesting a fetch command to fetch the proactive command to the external device, wherein
upon receipt of the fetch command through the communication section, the first transmission section transmits the proactive command to the external device through the communication section.

3. The portable electronic device according to claim 1, wherein
the processing section executes applications corresponding to commands according to the execution order corresponding to the commands.

4. The portable electronic device according to claim 2, wherein
the processing section executes applications corresponding to commands according to the execution order corresponding to the commands.

5. The portable electronic device according to claim 1, wherein
upon success in execution of a command, the processing section executes an application stored in the storage section.

6. The portable electronic device according to claim 2, wherein
upon success in execution of a command, the processing section executes an application stored in the storage section.

7. The portable electronic device according to claim 3, wherein
upon success in execution of a command, the processing section executes an application stored in the storage section.

8. The portable electronic device according to claim 4, wherein
upon success in execution of a command, the processing section executes an application stored in the storage section.

9. The portable electronic device according to claim 1, wherein
the information indicating the application is data of the TLV format including a Tag value which is not changed by the first transmission section.

10. The portable electronic device according to claim 1, further comprising:
a module (M) comprising the communication section, the storage section, the processing section, and the first transmission section; and
a main body (C) in which the module is incorporated.

11. The portable electronic device according to claims 1 to 10, wherein
the portable electronic device is an IC card.

12. A method of controlling a portable electronic device comprising:
receiving a command from an external device through a communication section (25) configured to transmit/receive data to/from the external device;
creating, when the command received from the external device is to be executed, by executing an application stored in a storage section (24) storing therein the application configured to create a proactive command, a proactive command including information indicating the application; and
transmitting the proactive command to the external device through the communication section.
